(19) Europäisches Patentamt
European Patent Office
Office européen des brevets

(11) **EP 3 649 492 B1**

(12) **FASCICULE DE BREVET EUROPEEN**

(45) Date de publication et mention
de la délivrance du brevet:
**24.08.2022 Bulletin 2022/34**

(21) Numéro de dépôt: **18773509.7**

(22) Date de dépôt: **05.07.2018**

(51) Classification Internationale des Brevets (IPC):
**G01V 13/00** (2006.01)    **G01V 3/10** (2006.01)
**G01S 5/02** (2010.01)

(52) Classification Coopérative des Brevets (CPC):
**G01V 13/00**; G01V 3/10

(86) Numéro de dépôt international:
**PCT/FR2018/051688**

(87) Numéro de publication internationale:
**WO 2019/008284 (10.01.2019 Gazette 2019/02)**

(54) **PROCEDE DE CALIBRATION D'UN LOCALISATEUR MAGNETIQUE**

VERFAHREN ZUR KALIBRIERUNG EINES MAGNETISCHEN ORTUNGSGERÄTES

METHOD FOR CALIBRATING A MAGNETIC LOCATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2017 FR 1756376**

(43) Date de publication de la demande:
**13.05.2020 Bulletin 2020/20**

(73) Titulaire: **MinMaxMedical**
**38700 La Tronche (FR)**

(72) Inventeurs:
• CHAVE, Mickaël
**38120 Saint Egreve (FR)**
• HUGUEL, Loïc
**38950 Saint Martin Le Vinoux (FR)**
• ROUSSEAU, Sandra
**38000 Grenoble (FR)**

(74) Mandataire: **Regimbeau**
**20, rue de Chazelles**
**75847 Paris Cedex 17 (FR)**

(56) Documents cités:
**US-A- 5 066 917     US-A1- 2017 176 623**
**US-B1- 8 635 043**

• ZIKMUND A ET AL: "Calibration of the 3-D Coil System's Orthogonality", IEEE TRANSACTIONS ON MAGNETICS, IEEE SERVICE CENTER, NEW YORK, NY, US, vol. 49, no. 1, 1 janvier 2013 (2013-01-01), pages 66-68, XP011483184, ISSN: 0018-9464, DOI: 10.1109/TMAG.2012.2218583

**Description**

CONTEXTE ET ARRIERE-PLAN TECHNOLOGIQUE

La présente invention se rapporte aux localisateurs magnétiques. Plus précisément, l'invention porte sur un procédé de calibrage d'émetteurs et de récepteurs utilisés pour la localisation magnétique.

Un localisateur magnétique se compose généralement d'un dispositif d'émission, dit émetteur, constitué d'une ou plusieurs bobines émettrices rigidement liées les unes aux autres, et d'un dispositif de réception, dit récepteur, constitué d'une ou plusieurs bobines réceptrices rigidement liées les unes aux autres. L'analyse conjointe des champs magnétiques émis par les bobines d'émission et des champs mesurés par les bobines de réception permet de déterminer la position et/ou l'orientation du dispositif de réception par rapport au dispositif d'émission.

Dans un tel système, la précision finale du système de localisation dépend notamment de la connaissance précise du champ magnétique émis par le dispositif d'émission et des caractéristiques du dispositif de réception. Les caractéristiques du champ magnétique émis (ou mesuré) dépendent entre autres du moment magnétique des bobines d'émission (ou de réception) ainsi que de l'orientation et de la position relative des différentes bobines constitutives de l'émetteur (ou du récepteur).

Cette connaissance des caractéristiques de l'émetteur et du récepteur peut être déterminée a priori à partir des éléments constitutifs de ces derniers. Il s'agit cependant d'une connaissance théorique qui nécessite d'imposer une construction très précise de l'émetteur et du récepteur et qui requiert une grande précision quant aux caractéristiques de leurs éléments constitutifs. Cette approche est coûteuse et ne convient pas lorsqu'il est souhaité que le système soit peu onéreux comme par exemple dans le cas d'un récepteur à usage unique.

Une autre approche est de déterminer a posteriori les caractéristiques de l'émetteur et du récepteur, au moyen d'un calibrage. Une méthode simple et peu coûteuse de calibrer l'émetteur et le récepteur d'un système de localisation magnétique est de leur faire faire des mouvements relatifs prédéterminés ou de les placer dans des positions relatives connues précisément, de faire émettre un champ magnétique par l'émetteur, de récupérer les grandeurs mesurées par le récepteur, puis de rechercher les différents paramètres de calibrage qui permettent de faire coïncider le modèle du champ théorique reçu avec les données effectivement mesurées.

Le document Zikmund, A. el al. (2013): "Calibration of the 3-D Coil System's Orthogonality",IEEE TRANSACTIONS ON MAGNETICS, IEEE SERVICE CENTER, divulgue un autre procédé de calibrage d'un localisateur magnétique qui comprend au moins deux capteurs : un émetteur comprenant une bobine émettrice et un récepteur comprenant une bobine réceptrice. Le procédé fait intervenir un troisième capteur de référence constitué par une bobine réceptrice.

Parmi les caractéristiques dont la connaissance est requise pour mettre en œuvre la localisation figure le moment magnétique. Cependant, avec la méthode citée précédemment, les moments magnétiques calibrés pour l'émetteur et le récepteur sont corrélés. Plus précisément, au lieu de déterminer le moment magnétique de l'émetteur $M_e$ et le moment magnétique du récepteur $M_r$ de manière indépendante, cette méthode ne permet que de déterminer le produit $M_e M_r$ de ces moments magnétiques. La connaissance du produit des moments magnétiques d'un émetteur et d'un récepteur est suffisante pour mettre en œuvre un procédé de localisation utilisant ce couple émetteur-récepteur. Cependant, l'émetteur ne pourra pas être utilisé avec un autre récepteur (et le récepteur avec un autre émetteur) sans devoir être à nouveau calibré. Cette méthode ne convient donc pas lorsqu'il est souhaité que le récepteur soit à usage unique.

PRESENTATION DE L'INVENTION

L'invention a pour but de résoudre au moins un des inconvénients précités, en proposant un procédé de calibrage d'un émetteur et d'un récepteur d'un localisateur magnétique qui soit simple à mettre en œuvre, peu onéreux, et qui permette la dé corrélation des moments magnétiques de l'émetteur et du récepteur.

A cet effet, il est proposé un procédé de calibrage d'un localisateur magnétique, ledit localisateur magnétique comprenant au moins deux capteurs :

- un émetteur comprenant au moins une bobine émettrice,
- un récepteur comprenant au moins une bobine réceptrice,

le procédé faisant intervenir un troisième capteur constitué par un émetteur-récepteur, ledit procédé comprenant, dans un ordre quelconque:

- émission d'un premier champ magnétique par l'émetteur et réception de premiers signaux générés dans le récepteur par ledit champ magnétique,
- émission d'un deuxième champ magnétique par l'émetteur et réception de deuxièmes signaux générés dans l'émetteur/récepteur par ledit champ magnétique,

- émission d'un troisième champ magnétique par l'émetteur/récepteur et réception de troisièmes signaux générés dans le récepteur par ledit champ magnétique,

le procédé de calibrage comprenant la détermination d'au moins un moment magnétique de l'émetteur à partir des premiers signaux, deuxièmes signaux et troisième signaux et d'un moment magnétique du récepteur à partir des premiers signaux, deuxièmes signaux et troisième signaux.

Le procédé est avantageusement complété par les caractéristiques suivantes, prises seules ou en quelconque de leurs combinaisons techniquement possibles :

- la détermination d'au moins un moment magnétique de l'émetteur et d'un moment magnétique du récepteur comprend :

  - la détermination d'une première matrice de moments magnétiques corrélés à partir des premiers signaux,
  - la détermination d'une deuxième matrice de moments magnétiques corrélés à partir des deuxièmes signaux,
  - la détermination d'une troisième matrice de moment magnétiques corrélés à partir des troisièmes signaux,

le moment magnétique de l'émetteur étant déterminé à partir de la première matrice des moments magnétiques corrélés, des deuxièmes moments magnétiques corrélés et des troisièmes moments magnétiques corrélés, et le moment magnétique du récepteur étant déterminé à partir du premier moment magnétique corrélé, du deuxième moment magnétique corrélé et du troisième moment magnétique corrélé ;

- le moment magnétique de l'émetteur et le moment magnétique du récepteur sont déterminés en minimisant un critère dérivé des différences entre :

  - la première matrice de moments corrélés et le produit du moment magnétique de l'émetteur et du moment magnétique du récepteur,
  - la deuxième matrice de moments corrélés et le produit du moment magnétique de l'émetteur et du moment magnétique de l'émetteur/récepteur,
  - la troisième matrice de moments corrélés et le produit du moment magnétique de l'émetteur/récepteur et du moment magnétique du récepteur ;

- pendant l'émission d'un champ magnétique par un capteur et la réception de signaux par un autre capteur, lesdits capteurs sont positionnés dans plusieurs configurations spatiales relatives différentes ;
- au moins un capteur est disposé sur un plateau tournant autour d'un axe de rotation de sorte qu'un axe autour duquel s'enroule une bobine du capteur ne soit pas colinéaire avec l'axe de rotation du plateau, et la configuration spatiale du capteur est modifiée par rotation du plateau entre plusieurs positions prédéterminées ;
- les configurations spatiales relatives des capteurs sont déterminées par la localisation des capteurs sur des images acquises par un imageur ;
- l'émetteur et l'émetteur-récepteur sont rigidement liés de sorte que leurs configurations spatiales relatives sont invariantes ;
- les étapes

  - d'émission d'un premier champ magnétique par l'émetteur et réception de premiers signaux générés dans le récepteur par ledit champ magnétique (S1) et
  - d'émission d'un troisième champ magnétique par l'émetteur/récepteur et réception de troisièmes signaux générés dans le récepteur par ledit champ magnétique (S3),

sont réalisées simultanément.

L'invention concerne également un produit programme d'ordinateur comprenant des instructions de code de programme enregistré sur un support tangible lisible par un ordinateur pour la détermination d'au moins un moment magnétique de l'émetteur à partir des premiers signaux, deuxièmes signaux et troisième signaux et d'un moment magnétique du récepteur à partir des premiers signaux, deuxièmes signaux et troisième signaux lors de la mise en oeuvre du procédé selon l'invention lorsque ledit programme est exécuté sur un ordinateur.

PRESENTATION DE LA FIGURE

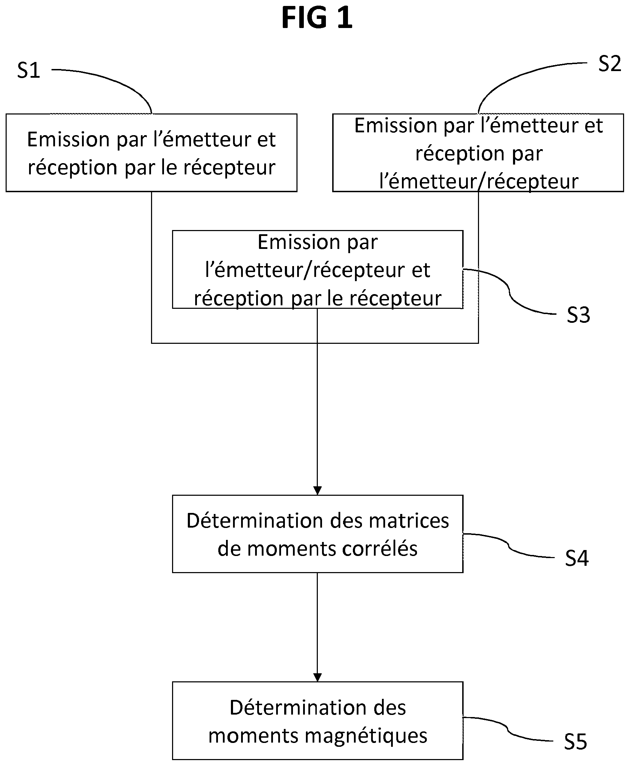

L'invention sera mieux comprise, grâce à la description ci-après, qui se rapporte à des modes de réalisations et des variantes selon la présente invention, donnés à titre d'exemples non limitatifs et expliqués avec référence au dessin annexé de la figure 1, qui illustre schématiquement des étapes du procédé selon un mode de réalisation possible de l'invention.

## DESCRIPTION DETAILLEE

Un système de localisation magnétique se compose au moins de deux capteurs :

- un émetteur comprenant au moins une bobine émettrice,
- un récepteur comprenant au moins une bobine réceptrice.

Généralement, l'émetteur comprend un nombre $N_e$ (Ne>=1) de bobines émettrices $Br_i$ rigidement liées les unes aux autres et orientées selon des axes distincts. On considère ici, à titre d'exemple, le cas d'un système dans lequel l'émetteur est constitué de 3 bobines d'émission orientées selon trois axes distincts, par exemple selon les trois axes d'un repère orthogonal. Ces trois axes des moments magnétiques respectifs des bobines peuvent être confondus avec l'axe de l'enroulement des bobines dans le cas d'un bobinage orthogonal à l'axe d'enroulement. Ils peuvent cependant en être différent si le bobinage n'est pas à 90°, par exemple à 45°. Lorsqu'une tension est imposée aux bornes d'une bobine émettrice, un courant circule dans la bobine émettrice qui génère alors un champ magnétique proportionnel au courant qui la parcoure et dont la forme dépend des caractéristiques de la bobine (orientation, moment magnétique, forme....). Une source de tension peut, par exemple, être utilisée pour imposer une tension aux bornes de la bobine d'émission entraînant la création d'un courant. Cette tension peut, par exemple être sinusoïdale. Les $N_e$ bobines émettrices peuvent être soumises à des tensions de fréquences différentes.

De même, le récepteur comprend généralement un nombre $N_r$ de bobines réceptrices $Be_i$ rigidement liées les unes aux autres et orientées selon des axes distincts. On considère ici, à titre d'exemple, le cas d'un système dans lequel le récepteur est constitué de 3 bobines de réception orientées selon trois axes distincts, par exemple selon les trois axes d'un repère orthogonal.

En présence d'un champ magnétique variable, une tension proportionnelle à la variation du flux du champ magnétique apparaît dans la bobine réceptrice. En mesurant la tension aux bornes de la bobine réceptrice, grâce à un voltmètre ou autre moyen similaire, ou en mesurant le courant parcourant la bobine réceptrice par un ampèremètre ou autre moyen similaire, il est possible de déterminer le champ magnétique auquel est soumis la bobine réceptrice, à condition de connaître les caractéristiques de la bobine réceptrice, qui comprennent notamment le moment magnétique de la bobine réceptrice.

L'émetteur et le récepteur sont reliés à un dispositif de traitement, comprenant par exemple un microprocesseur relié d'une part au générateur du dispositif d'émission et d'autre part au dispositif de lecture du dispositif de réception. Le dispositif de traitement est configuré pour traiter les signaux émis et reçus, et permet ainsi de retrouver à partir de ces derniers la position et l'orientation du récepteur relativement à l'émetteur. Le dispositif de traitement reçoit des informations concernant les caractéristiques des signaux d'excitation appliqués aux bobines d'émission ainsi que des informations concernant les caractéristiques des signaux parcourant les bobines réceptrices (représentatifs du champ reçu par la bobine réceptrice). A partir de l'intensité des champs captés par les bobines de réception, le dispositif de traitement détermine la position et/ou l'orientation de l'ensemble de bobines de réception par rapport à l'ensemble de bobines d'émission.

Plus particulièrement, le dispositif de traitement détermine (Ne x Nr) valeurs de champ correspondant respectivement au champ reçu par la bobine réceptrice Br1 en provenance de la bobine émettrice Be1, au champ reçu par la bobine réceptrice Br2 en provenance de la bobine émettrice Be2... A partir de ces valeurs de champ, l'unité de traitement calcule les coordonnées spatiales de position et d'orientation de l'ensemble des bobines de réception par rapport aux bobines d'émissions à l'aide d'un algorithme de minimisation, par exemple de type Levenberg-Marquardt, permettant de minimiser l'erreur entre les champs mesurés et les champs théoriques modélisés à partir de connaissances a priori de l'émetteur et du récepteur.

Comme expliqué précédemment, lors d'une phase d'utilisation du système de localisation magnétique, le dispositif de traitement utilise la connaissance à priori des caractéristiques des capteurs et les caractéristiques du champ reçu par le récepteur pour retrouver les positions relatives des capteurs. Lors du procédé de calibrage, le procédé inverse est exploité, c'est-à-dire que la connaissance des positions relatives du système et les caractéristiques du champ reçu par le récepteur sont utilisées pour retrouver les caractéristiques des capteurs.

Lors du procédé de calibrage proposée, l'émetteur et le récepteur sont placés dans des positions relatives connues avec précision ou effectuent des déplacements relatifs connus avec précision. En chaque position prise par les capteurs, le système enregistre le champ reçu par le récepteur lorsque l'émetteur émet. Le dispositif de traitement est ensuite utilisé pour rechercher les différentes caractéristiques des bobines en minimisant l'erreur entre le champ mesuré et le champ théorique généré à l'aide du modèle des bobines et de la connaissance des positions relatives des bobines, à l'aide d'un algorithme de minimisation, par exemple de type Levenberg-Marquardt.

Typiquement le flux traversant une bobine réceptrice $B_r$ de moment magnétique $Mr$ lorsqu'une bobine émettrice $B_e$ de moment magnétique $Me$ émet peut être modélisé selon le modèle dipolaire comme ci-dessous :

$$H_{e \to r} = M_r \vec{u_r} . \left( \frac{\mu_0}{4\pi} Me \left( 3 \frac{\vec{r}(\vec{u_e}.\vec{r})}{r^5} - \frac{\vec{u_e}}{r^3} \right) \right) = \frac{\mu_0}{4\pi} \frac{M_r M_e}{r^3} \vec{u_r} . \left( 3 \frac{\vec{r}(\vec{u_e}.\vec{r})}{r^2} - \vec{u_e} \right)$$

Où $\vec{r}$ représente le vecteur de position relative entre le centre de la bobine réceptrice $B_r$ et de la bobine émettrice $B_e$, $\mu_0$ la perméabilité magnétique du vide, $\vec{u_e}$ le vecteur unitaire de la direction de l'axe de la bobine émettrice, $\vec{u_r}$ le vecteur unitaire de la direction de l'axe de la bobine réceptrice. On a donc $\vec{r} = \overrightarrow{O_{Be}O_{Br}}$ où $O_{Be}$ représente le centre de la bobine émettrice $B_e$ et $O_{Br}$ celui de la bobine réceptrice $B_r$. On a donc

$$\vec{r} = \overrightarrow{O_{Be}O_e} + \overrightarrow{O_e O_r} - \overrightarrow{O_{Br}O_r} .$$

Dans le cas du procédé de calibrage, on connaît donc $\overrightarrow{O_e O_r}$ (position relative du centre de l'émetteur et du centre du récepteur) et on cherche à déterminer $\overrightarrow{O_{Be}O_e}$ (position relative de la bobine émettrice considérée au centre de l'émetteur), $\overrightarrow{O_{Br}O_r}$ (position relative du centre de la bobine réceptrice considérée au centre du récepteur), $\vec{u_e}$, $\vec{u_r}$, $Me$ et $Mr$.

Dans le procédé proposé, on cherche les caractéristiques suivantes :

- Position du centre de la bobine : 3 composantes,
- Orientation de l'axe de la bobine : 2 composantes,
- Moment magnétique de la bobine : 1 composante.

Pour chaque bobine de l'émetteur ou du récepteur, 6 composantes sont donc recherchées. Ainsi il faut donc récupérer au moins 6 mesures indépendantes et donc placer l'émetteur et le récepteur dans au moins 6 configurations spatiales différentes. Il est à noter que ceci n'est pas restrictif, d'autres caractéristiques peuvent être recherchées pour les bobines telles que l'épaisseur du fil, l'épaisseur de l'enroulement, la longueur de l'enroulement...

Par ailleurs, pour permettre un bon calibrage, il est préférable que les différentes positions testées permettent de représenter une variété suffisante de l'espace. Afin de s'en assurer, il est possible par exemple d'utiliser des positions variant par des rotations.

Dans l'exemple ci-après, au moins un plateau tournant autour d'un axe de rotation est utilisé pour modifier la position d'au moins un capteur, et donc la configuration spatiale relative des capteurs, par rotation du plateau entre plusieurs positions prédéterminées. Cette solution permet d'assurer un positionnement et une orientation précise du capteur déplacé, et donc améliore la précision de la calibration. De plus, il n'est pas nécessaire de déterminer précisément le placement des capteurs, il suffit de relever un placement sur le plateau et les angles de rotation du plateau lors des changements de configuration spatiale. Un plateau tournant peut par exemple prendre 6 ou 12 positions angulaires différentes.

Afin de permettre d'obtenir une variété de positions et d'orientations suffisante, il est préférable de faire en sorte que toutes les bobines de l'émetteur et du récepteur aient changé au moins une fois de position et d'orientation durant le procédé de calibrage. A cette fin, de préférence, le capteur est placé sur le plateau de manière à ce qu'aucune des bobines dudit capteur n'ait son axe d'émission qui soit colinéaire ou proche de l'axe de rotation du plateau (typiquement angle supérieur à 5° entre les axes). Alternativement, il est possible d'effectuer plusieurs tours de plateau en plaçant à chaque tour le capteur dans une orientation et une position différente.

Le principe est donc de se placer dans différentes positions (donc avec différentes positions relatives du centre de l'émetteur et du centre du récepteur $\overrightarrow{O_e O_r}$) et de chercher les différentes caractéristiques de manière à minimiser l'erreur entre le flux théorique $H_{e \to r}$ traversant la bobine réceptrice et le flux $H_{mes}$ déterminé à partir des mesures sur la bobine réceptrice. Cependant, le champ mesuré dépend alors directement du produit des moments $M_r M_e$. Ainsi il n'est pas possible de retrouver précisément $M_r$ et $M_e$, mais seulement la valeur de leur produit. Les mesures donnent donc la matrice du produit des moments :

$$M = \begin{pmatrix} M_{e1}M_{r1} & M_{e1}M_{r2} & M_{e1}M_{r3} \\ M_{e2}M_{r1} & M_{e2}M_{r2} & M_{e2}M_{r3} \\ M_{e3}M_{r1} & M_{e3}M_{r2} & M_{e3}M_{r3} \end{pmatrix}$$

L'invention propose d'utiliser un troisième capteur constitué par un émetteur-récepteur, afin de pouvoir déterminer individuellement le moment magnétique de la bobine émettrice et le moment magnétique de la bobine réceptrice. L'émetteur-récepteur du troisième capteur fonctionne comme un émetteur lorsqu'il est utilisé pour émettre un champ magnétique, et comme un récepteur lorsqu'il est utilisé pour déterminer le champ magnétique auquel il est soumis. L'émetteur-récepteur utilise la même bobine pour ce faire, qui est donc une bobine émettrice-réceptrice.

Un premier couple est constitué par l'émetteur et le récepteur. L'émetteur et le récepteur sont chacun disposés sur un plateau tournant autour d'un axe de rotation. Il y a donc un plateau tournant portant l'émetteur et un plateau tournant portant le récepteur. Les deux plateaux sont placés à une distance déterminée l'un de l'autre. Un premier champ magnétique est alors émis par l'émetteur (étape S1), qui génère alors des premiers signaux dans le récepteur, lesquels sont relevés. Au moins un plateau tournant est tourné d'un angle déterminé pour changer la configuration spatiale, et d'autres premiers signaux sont relevés. L'opération est réitérée autant de fois que souhaité pour obtenir des mesures à différentes configurations spatiales.

Le récepteur est ensuite remplacé par l'émetteur-récepteur. Un deuxième champ magnétique est alors émis par l'émetteur (étape S2), qui génère alors des deuxièmes signaux dans l'émetteur-récepteur, lesquels sont relevés. Comme précédemment, l'opération est réitérée autant de fois que souhaité pour obtenir des mesures à différentes configurations spatiales.

L'émetteur est ensuite remplacé par le récepteur. Un troisième champ magnétique est alors émis par l'émetteur-récepteur (étape S3), qui génère alors des troisièmes signaux dans le récepteur, lesquels sont relevés. Comme précédemment, l'opération est réitérée autant de fois que souhaité pour obtenir des mesures à différentes configurations spatiales.

Pour chaque séquence, les mesures à différentes configurations spatiales peuvent être combinées pour rendre plus précise la détermination des caractéristiques des capteurs, en s'affranchissant d'éventuelles déviations résultant d'une configuration spatiale particulière.

Selon une variante, il est possible que l'émetteur et l'émetteur-récepteur soient rigidement liés de sorte que leurs configurations spatiales relatives sont invariantes. Par exemple, l'émetteur peut être fixé sur une partie d'un support rigide et l'émetteur récepteur sur une autre partie du même support rigide. Les configurations spatiales relatives de l'émetteur et de l'émetteur-récepteur (position, orientation) peuvent alors être connues. Il est à noter que la bobine émettrice de l'émetteur et la bobine émettrice-réceptrice de l'émetteur-récepteur restent distinctes.

Dans ce cas, les étapes :

- d'émission d'un premier champ magnétique par l'émetteur et réception de premiers signaux générés dans le récepteur par ledit champ magnétique (S1) et
- d'émission d'un troisième champ magnétique par l'émetteur/récepteur et réception de troisièmes signaux générés dans le récepteur par ledit champ magnétique (S3),

peuvent être réalisées simultanément, afin de gagner du temps. L'émetteur et l'émetteur-récepteur, rigidement liés, sont donc présents en même temps que le récepteur sur le plateau tournant (ou autre dispositif permettant de connaître les différentes configurations spatiales relatives).

A partir des signaux ainsi relevés, on peut déterminer des matrices des moments corrélés (étape S4). Si l'on se place dans le cas simplifié d'émetteurs et récepteurs ayant seulement une bobine on retrouve alors :

- un premier moment magnétique corrélé A à partir des premiers signaux, qui équivaut au produit du moment magnétique $M_e$ de l'émetteur et du moment magnétique $M_r$ du récepteur:

$$A = M_e \times M_r$$

- un deuxième moment magnétique corrélé B à partir des deuxièmes signaux, qui équivaut au produit du moment magnétique $M_e$ de l'émetteur et du moment magnétique $M_{er}$ de l'émetteur-récepteur:

$$B = M_e \times M_C$$

- un troisième moment magnétique corrélé C à partir des troisièmes signaux, qui équivaut au produit du moment magnétique $M_c$ de l'émetteur-récepteur et du moment magnétique $M_r$ du récepteur:

$$C = M_C \times M_r$$

A partir de ces trois moments magnétiques corrélés A, B, et C, on peut déterminer le moment magnétique de l'émetteur $M_e$ et le moment magnétique du récepteur $M_r$ (étape S5).

Plus précisément, le moment magnétique de l'émetteur $M_e$ est déterminé à partir du premier moment magnétique corrélé A, du deuxième moment magnétique corrélé B et du troisième moment magnétique corrélé C. Le moment magnétique de l'émetteur $M_e$ correspond en effet à :

$$M_e = \sqrt{\frac{AB}{C}}$$

Le moment magnétique du récepteur est déterminé à partir du premier moment magnétique corrélé A, du deuxième moment magnétique corrélé B et du troisième moment magnétique corrélé C. Le moment magnétique du récepteur $M_r$ correspond à :

$$M_r = \sqrt{\frac{AC}{B}}$$

On peut également déterminer le moment magnétique de l'émetteur-récepteur $M_c$, qui correspond à :

$$M_C = \sqrt{\frac{BC}{A}}$$

On peut donc retrouver le moment magnétique des différents capteurs, sans corrélation entre eux

Dans le cas plus général (par exemple capteurs à 3 bobines), si on introduit les notations matricielles des moments magnétiques des capteurs :

$$M_e = \begin{pmatrix} M_{e1} \\ M_{e2} \\ M_{e3} \end{pmatrix}, M_r = \begin{pmatrix} M_{r1} \\ M_{r2} \\ M_{r3} \end{pmatrix} \ et \ M_c = \begin{pmatrix} M_{c1} \\ M_{c2} \\ M_{c3} \end{pmatrix}$$

On peut déterminer les matrices de moments magnétiques corrélés de chaque couple de capteurs :

- Une première matrice de moments corrélés A à partir des premiers signaux, qui équivaut au produit du moment magnétique $M_{ei}$ des bobines de l'émetteur et du moment magnétique $M_{ri}$ des bobines du récepteur:

$$A = \begin{pmatrix} M_{e1}M_{r1} & M_{e1}M_{r2} & M_{e1}M_{r3} \\ M_{e2}M_{r1} & M_{e2}M_{r2} & M_{e2}M_{r3} \\ M_{e3}M_{r1} & M_{e3}M_{r2} & M_{e3}M_{r3} \end{pmatrix} = M_e \, M_r^t$$

- Une deuxième matrice de moments corrélés B à partir des premiers signaux, qui équivaut au produit du moment magnétique $M_{ei}$ des bobines de l'émetteur et du moment magnétique $M_{ci}$ des bobines de l'émetteur/récepteur:

$$B = \begin{pmatrix} M_{e1}M_{c1} & M_{e1}M_{c2} & M_{e1}M_{c3} \\ M_{e2}M_{c1} & M_{e2}M_{c2} & M_{e2}M_{c3} \\ M_{e3}M_{c1} & M_{e3}M_{c2} & M_{e3}M_{c3} \end{pmatrix} = M_e \, M_c^t$$

- Une troisième matrice de moments corrélés C à partir des troisième signaux, qui équivaut au produit du moment magnétique $M_{ci}$ des bobines de l'émetteur/récepteur et du moment magnétique $M_{ri}$ des bobines du récepteur:

$$C = \begin{pmatrix} M_{c1}M_{r1} & M_{c1}M_{r2} & M_{c1}M_{r3} \\ M_{c2}M_{r1} & M_{c2}M_{r2} & M_{c2}M_{r3} \\ M_{c3}M_{r1} & M_{c3}M_{r2} & M_{c3}M_{r3} \end{pmatrix} = M_c \, M_r^t$$

Comme montré précédemment, les différents moments magnétiques non corrélés de l'émetteur, du récepteur et de l'émetteur/récepteur peuvent alors être retrouvés à partir de ces trois matrices à l'aide d'un algorithme de minimisation. Plus précisément, les moments magnétiques peuvent être déterminés en minimisant un critère dérivé des différences entre :

- la première matrice de moments corrélés et le produit du moment magnétique de l'émetteur et du moment magnétique du récepteur,
- la deuxième matrice de moments corrélés et le produit du moment magnétique de l'émetteur et du moment magnétique de l'émetteur/récepteur,
- la troisième matrice de moments corrélés et le produit du moment magnétique de l'émetteur/récepteur et du moment magnétique du récepteur.

On peut notamment utiliser par exemple un algorithme de minimisation de type Levenberg-Marquardt. A partir des matrices de moments corrélés A, B et C, on cherche alors à estimer les matrices $M_e$, $M_r$, et $M_c$ de façon à minimiser au sens des moindres carrés le critère G défini par la somme des composantes au carré de la matrice d'erreur J défini par :

$$J = \begin{pmatrix} A - M_e \, M_r^t \\ B - M_e \, M_c^t \\ C - M_c \, M_r^t \end{pmatrix} \; et \; G = \sum_{i}^{9} \sum_{j}^{3} J_{ij}^2$$

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention.

**Revendications**

1. Procédé de calibrage d'un localisateur magnétique, ledit localisateur magnétique comprenant au moins deux capteurs :

    - un émetteur comprenant au moins une bobine émettrice,
    - un récepteur comprenant au moins une bobine réceptrice,

    le procédé étant **caractérisé en ce qu'**il fait intervenir un troisième capteur constitué par un émetteur-récepteur comprenant une bobine émettrice-réceptrice,
    ledit procédé comprenant, dans un ordre quelconque:

    - émission d'un premier champ magnétique par la bobine émettrice de l'émetteur et réception par la bobine réceptrice de premiers signaux générés dans le récepteur par ledit champ magnétique (S1),
    - émission d'un deuxième champ magnétique par la bobine émettrice de l'émetteur et réception par la bobine émettrice-réceptrice de deuxièmes signaux générés dans l'émetteur/récepteur par ledit champ magnétique (S2),
    - émission d'un troisième champ magnétique par la bobine émettrice-réceptrice de l'émetteur/récepteur et réception par la bobine réceptrice de troisièmes signaux générés dans le récepteur par ledit champ magnétique (S3),

le procédé de calibrage comprenant la détermination (S5) d'au moins un moment magnétique de l'émetteur à partir des premiers signaux, deuxièmes signaux et troisième signaux et d'un moment magnétique du récepteur à partir des premiers signaux, deuxièmes signaux et troisième signaux.

2. Procédé selon la revendication 1, dans lequel la détermination d'au moins un moment magnétique de l'émetteur et d'un moment magnétique du récepteur comprend (S4) :

- la détermination d'une première matrice de moments magnétiques corrélés à partir des premiers signaux,
- la détermination d'une deuxième matrice de moments magnétiques corrélés à partir des deuxièmes signaux,
- la détermination d'une troisième matrice de moment magnétiques corrélés à partir des troisièmes signaux,

le moment magnétique de l'émetteur étant déterminé à partir de la première matrice des moments magnétiques corrélés, des deuxièmes moments magnétiques corrélés et des troisièmes moments magnétiques corrélés, et le moment magnétique du récepteur étant déterminé à partir du premier moment magnétique corrélé, du deuxième moment magnétique corrélé et du troisième moment magnétique corrélé.

3. Procédé selon la revendication 2, dans lequel le moment magnétique de l'émetteur et le moment magnétique du récepteur sont déterminés en minimisant un critère dérivé des différences entre :

- la première matrice de moments corrélés et le produit du moment magnétique de l'émetteur et du moment magnétique du récepteur,
- la deuxième matrice de moments corrélés et le produit du moment magnétique de l'émetteur et du moment magnétique de l'émetteur/récepteur,
- la troisième matrice de moments corrélés et le produit du moment magnétique de l'émetteur/récepteur et du moment magnétique du récepteur.

4. Procédé selon l'une quelconque des revendications précédentes, dans lequel pendant l'émission d'un champ magnétique par un capteur et la réception de signaux par un autre capteur, lesdits capteurs sont positionnés dans plusieurs configurations spatiales relatives différentes.

5. Procédé selon la revendication précédente, dans lequel au moins un capteur est disposé sur un plateau tournant autour d'un axe de rotation de sorte qu'un axe autour duquel s'enroule une bobine du capteur ne soit pas colinéaire avec l'axe de rotation du plateau, et la configuration spatiale du capteur est modifiée par rotation du plateau entre plusieurs positions prédéterminées.

6. Procédé selon la revendication 4, dans lequel les configurations spatiales relatives des capteurs sont déterminées par la localisation des capteurs sur des images acquises par un imageur.

7. Produit programme d'ordinateur comprenant des instructions de code de programme enregistré sur un support tangible lisible par un ordinateur pour la détermination d'au moins un moment magnétique de l'émetteur à partir des premiers signaux, deuxièmes signaux et troisième signaux et d'un moment magnétique du récepteur à partir des premiers signaux, deuxièmes signaux et troisième signaux lors de la mise en œuvre du procédé selon l'une quelconque des revendications précédentes lorsque ledit programme est exécuté sur un ordinateur.

**Patentansprüche**

1. Verfahren zur Kalibrierung eines magnetischen Ortungsgerätes, wobei das magnetische Ortungsgerät mindestens zwei Sensoren umfasst:

- einen Sender, der mindestens eine Sendespule umfasst,
- einen Empfänger, der mindestens eine Empfangsspule umfasst,

wobei das Verfahren **dadurch gekennzeichnet ist, dass** es einen dritten Sensor eingreifen lässt, der aus einem Sender-Empfänger besteht, der eine Sende-Empfangsspule umfasst, wobei das Verfahren in einer beliebigen Reihenfolge umfasst:

- Senden eines ersten Magnetfeldes durch die Sendespule des Senders, und Empfangen durch die Empfangsspule erster Signale, die in dem Empfänger durch das Magnetfeld (S1) erzeugt werden,
- Senden eines zweiten Magnetfeldes durch die Sendespule des Senders und Empfangen durch die Sende-Empfangsspule von zweiten Signalen, die in dem Sender/Empfänger durch das Magnetfeld (S2) erzeugt werden,
- Senden eines dritten Magnetfeldes durch die Sende-Empfangsspule des Senders/Empfängers und Empfangen durch die Empfangsspule von dritten Signalen, die in dem Empfänger durch das Magnetfeld (S3) erzeugt werden,

wobei das Verfahren zur Kalibrierung das Bestimmen (S5) mindestens eines magnetischen Moments des Senders aus den ersten Signalen, zweiten Signalen und dritten Signalen und eines magnetischen Moments des Empfängers aus den ersten Signalen, zweiten Signalen und dritten Signalen umfasst.

2. Verfahren nach Anspruch 1, wobei das Bestimmen mindestens eines magnetischen Moments des Senders und eines magnetischen Moments des Empfängers umfasst (S4):

- das Bestimmen einer ersten Matrix an korrelierten magnetischen Momenten aus den ersten Signalen,
- das Bestimmen einer zweiten Matrix an korrelierten magnetischen Momenten aus den zweiten Signalen,
- das Bestimmen einer dritten Matrix an korrelierten magnetischen Momenten aus den dritten Signalen,

wobei das magnetische Moment des Senders aus der ersten Matrix der korrelierten magnetischen Momente, der zweiten korrelierten magnetischen Momente und der dritten korrelierten magnetischen Momente bestimmt wird, und das magnetische Moment des Empfängers aus dem ersten korrelierten magnetischen Moment, dem zweiten korrelierten magnetischen Moment und dem dritten korrelierten magnetischen Moment bestimmt wird.

3. Verfahren nach Anspruch 2, wobei das magnetische Moment des Senders und das magnetische Moment des Empfängers durch Minimieren eines Kriteriums bestimmt werden, das aus den Unterschieden abgeleitet wird, zwischen:

- der ersten Matrix an korrelierten Momenten und dem Produkt des magnetischen Moments des Senders und des magnetischen Moments des Empfängers,
- der zweiten Matrix an korrelierten Momenten und dem Produkt des magnetischen Moments des Senders und des magnetischen Moments des Senders/Empfängers,
- der dritten Matrix an korrelierten Momenten und dem Produkt des magnetischen Moments des Senders/Empfängers und des magnetischen Moments des Empfängers.

4. Verfahren nach einem der vorstehenden Ansprüche, wobei die Sensoren während des Sendens eines Magnetfeldes und einen Sensor und des Empfangs von Signalen durch einen anderen Sensor, in mehreren unterschiedlichen räumlichen Konfigurationen zueinander positioniert sind.

5. Verfahren nach dem vorstehenden Anspruch, wobei mindestens ein Sensor auf einer Platte angeordnet ist, die sich derart um eine Rotationsachse dreht, dass eine Achse, um die sich eine Spule des Sensors aufwickelt, nicht kollinear mit der Rotationsachse der Platte ist, und die räumliche Konfiguration des Sensors durch Rotation der Platte zwischen mehreren vorbestimmten Positionen verändert wird.

6. Verfahren nach Anspruch 4, wobei die räumlichen Konfigurationen der Sensoren zueinander durch Ortung der Sensoren auf Bildern bestimmt werden, die durch einen Bildgeber erfasst werden.

7. Computerprogrammprodukt, das Anweisungen eines Programmcodes umfasst, der auf einem durch einen Computer lesbaren fassbaren Medium gespeichert ist, zur Bestimmung mindestens eines magnetischen Moments des Senders aus den ersten Signalen, zweiten Signalen und dritten Signalen und eines magnetischen Moments des Empfängers aus den ersten Signalen, zweiten Signalen und dritten Signalen beim Umsetzen des Verfahrens nach einem der vorstehenden Ansprüche, wenn das Programm auf einem Computer ausgeführt wird.

**Claims**

1. A method for calibrating a magnetic locator, said magnetic locator comprising at least two sensors:

- a transmitter comprising at least one transmitter coil,
- a receiver comprising at least one receiver coil,

the method being **characterized in that** it involves a third sensor consisting of a transmitter-receiver comprising a transmitter-receiver coil,

said method comprising, in any order

- emission of a first magnetic field by the transmitter coil and reception by the receiver coil of first signals generated in the receiver by said magnetic field (S1),
- emission of a second magnetic field by the transmitter coil and reception by the transmitter/receiver coil of second signals generated in the transmitter/receiver by said magnetic field (S2),
- emission of a third magnetic field by the transmitter/receiver coil of the transmitter/receiver and reception by the receiver coil of third signals generated in the receiver by said magnetic field (S3),

the calibration method comprising determining (S5) at least a transmitter magnetic moment from the first, second and third signals and a receiver magnetic moment from the first, second and third signals.

2. The method of claim 1, wherein determining at least one magnetic moment of the transmitter and a magnetic moment of the receiver comprises (S4):

- the determination of a first matrix of correlated magnetic moments from the first signals,
- determining a second matrix of correlated magnetic moments from the second signals,
- determining a third correlated magnetic moment matrix from the third signals, the magnetic moment of the transmitter being determined from the first correlated magnetic moment matrix, the second correlated magnetic moment matrix and the third correlated magnetic moment matrix, and the magnetic moment of the receiver being determined from the first correlated magnetic moment, the second correlated magnetic moment and the third correlated magnetic moment.

3. The method of claim 2, wherein the magnetic moment of the transmitter and the magnetic moment of the receiver are determined by minimizing a criterion derived from the differences between:

- the first matrix of correlated moments and the product of the magnetic moment of the transmitter and the magnetic moment of the receiver,
- the second matrix of correlated moments and the product of the magnetic moment of the transmitter and the magnetic moment of the transmitter/receiver,
- the third matrix of correlated moments and the product of the magnetic moment of the transmitter/receiver and the magnetic moment of the receiver.

4. The method according to any one of the preceding claims, wherein during the emission of a magnetic field by one sensor and the reception of signals by another sensor, said sensors are positioned in a plurality of different relative spatial configurations.

5. A method according to the preceding claim, wherein at least one sensor is disposed on a turntable rotating about an axis of rotation such that an axis about which a coil of the sensor is wound is not collinear with the axis of rotation of the turntable, and the spatial configuration of the sensor is changed by rotating the turntable between a plurality of predetermined positions.

6. The method of claim 4, wherein the relative spatial configurations of the sensors are determined by locating the sensors in images acquired by an imager.

7. A computer program product comprising program code instructions recorded on a tangible computer-readable medium for determining at least a transmitter magnetic moment from the first signals, second signals and third signals and a receiver magnetic moment from the first signals, second signals and third signals when implementing the method according to any one of the preceding claims when said program is executed on a computer.

# FIG 1

S1

S2

Emission par l'émetteur et réception par le récepteur

Emission par l'émetteur et réception par l'émetteur/récepteur

Emission par l'émetteur/récepteur et réception par le récepteur

S3

Détermination des matrices de moments corrélés

S4

Détermination des moments magnétiques

S5